# EUROPEAN PATENT SPECIFICATION

(11) **EP 4 156 181 B1**
(45) Date of publication and mention of the grant of the patent: **25.11.2026**
(21) Application number: 21198891.0
(22) Date of filing: 24.09.2021
(51) Int. Cl.: G10L 21/0208, G10L 21/0316, G10L 21/043

(54) **CONTROLLING PLAYBACK OF AUDIO DATA**
STEUERUNG DER WIEDERGABE VON AUDIODATEN
CONTRÔLE DE LA LECTURE DE DONNÉES AUDIO

(43) Date of publication of application: 29.03.2023
(73) Proprietor: Elektrobit Automotive GmbH, 91058 Erlangen (DE)
(72) Inventor: Rueß, Christof, 60488 Frankfurt am Main (DE)
(74) Representative: Aumovio Corporation

(56) References cited:
- US-A1- 2013 322 634
- US-A1- 2018 081 618
- US-A1- 2018 091 913
- US-A1- 2020 107 122
- US-A1- 2021 204 059
- TORCOLI MATTEO ET AL: "Background Ducking to Produce Esthetically Pleasing Audio for TV with Clear Speech", AES CONVENTION 146, 20 March 2019 (2019-03-20), XP055898401, Retrieved from the Internet <URL:https://www.aes.org/tmpFiles/elib/20220307/20308.pdf> [retrieved on 20220307]
- FÜG SIMONE ET AL: "Design, Coding and Processing of Metadata for Object-Based Interactive Audio", AES CONVENTION 137; OCTOBER 2014, AES, 60 EAST 42ND STREET, ROOM 2520 NEW YORK 10165-2520, USA, 8 October 2014 (2014-10-08), XP040639006

## Description

The present invention is related to a method, a computer program code, and an apparatus for controlling playback of audio data. The invention is further directed towards a motor vehicle and an electronic device making use of such a method or apparatus, as well as to a media format suitable for use with such a method or apparatus.

Today's vehicles are typically equipped with systems for playback of audio data, e.g. music or audiobooks. As such systems are often used to provide information about the vehicle, they are also referred to as infotainment systems.

In case a verbal announcement needs to be made during playback of audio data, e.g. a navigation command, but also in case of a phone call or a notification from a messenger or social media, audio playback needs to be controlled in such way that the driver of the vehicle is able to understand the announcement or the phone call. In currently available car infotainment systems, verbal announcements typically only lead to a reduction of the volume of the currently played media for at least some speakers.

In this regard, US 2017/0193991 A1 discloses an apparatus for enhancing speech prompts in a vehicle. The apparatus includes an audio processor that is electrically coupled to a plurality of loudspeakers in a vehicle. The audio processor is programmed to provide entertainment data to the plurality of loudspeakers for playback in the vehicle and to receive a speech prompt indicative of only a spoken audio output to a driver in the vehicle. The audio processor is further programmed to mute the entertainment data that is played back on a first loudspeaker of the plurality of loudspeakers in response to the speech prompt and to provide the speech prompt to the first loudspeaker for playback to the driver in response to the speech prompt.

Unfortunately, simply reducing the volume of the currently played media may lead to bad comprehensibility of the voice-over. In addition, it compromises the music or media listening experience.

With the ever-increasing processing power of electronic systems, infotainment systems are now capable of more sophisticated audio processing.

For example, US 2021/0204059 A1 discloses a method for generating audio via a loudspeaker system in a vehicle. Incoming audio signals from a vehicle microphone array are received and beamforming is applied to the incoming audio signals. It is then determined whether human generated sound is detected within the audio signal. In response to human generated sound being detected, a loudspeaker configured to emit non-human sound is instructed to adjust the non-human sound.

US 2018/0083587 A1 discloses a method for adjusting audio file playback in terms of volume and/or compression. An audio file is separated into tracks, each attributable to a different instrument. The instrument for which the audio signals are dominant or loudest are determined and settings for the volume preference of the audio signals attributable to each different instrument are accessed. The setting for the volume preference of the audio signals attributable to the instrument that is dominant or loudest are modified based on user input altering a volume at which the audio file is output without modification of the setting for the volume preference of the audio signals attributable to another instrument. Furthermore, the audio signals are amplified or attenuated based upon the modified setting.

US 2020/0107122 A1 discloses a method for adjusting audio being outputted through a beam forming loudspeaker array. Program audio is rendered to drive the loudspeaker array to produce sound beams having a main content pattern that is aimed at a listener, superimposed with several diffuse content patterns that are aimed away from the listener. In response to receiving an alert message that refers to alert audio, the portion of the program audio in the main pattern is moved into the diffuse patterns, and the alert audio is rendered to drive the loudspeaker array so that the portion of the program audio in the main pattern is replaced with the alert audio.

US 2013/0322634 A1 discloses a context-aware voice guidance method, which interacts with other voice services of a user device. The voice guidance does not provide audible guidance while the user is making a verbal request to any of the voice-activated services. Instead, the voice guidance transcribes its output on the screen while the verbal requests from the user are received. The voice guidance may distinguish between music that can be ducked and spoken words, for example from an audiobook, that the user wants to pause instead of being skipped. The voice guidance ducks music but pauses spoken words of an audio book in order to provide voice guidance to the user.

US 2018/0091913 A1 discloses techniques related to voice interaction in an environment with a media playback system that is playing back audio content. While playing back first audio in a given environment at a given loudness, a playback device detects that an event is anticipated in the given environment, the event involving playback of second audio, and determines a loudness of background noise in the given environment, the background noise comprising ambient noise in the given environment. The playback device ducks the first audio in proportion to a difference between the given loudness of the first audio and the determined loudness of the background noise and plays back the ducked first audio concurrently with the second audio.

US 2018/0081618 A1 discloses an apparatus for audio segment playback coordination. A program module determines program timing windows corresponding to program segments for playing on an audio player device. An announcement module determines an announcement timing window for an announcement segment for playing on the audio player device. A control module analyzes the program timing windows and the announcement timing window and coordinates the playing of the announcement segment relative to the playing of the program segments to minimize an interruption of the playing of the program segments when playing the announcement segment.

The article M. Torcoli et al.: "Background Ducking to Produce Esthetically Pleasing Audio for TV with Clear Speech", AES Convention 146 (2019), Paper 10175, analyzes common ducking practices found in TV documentaries and presents results of subjective tests on listener preferences on the loudness difference between commentary and background during ducking.

The article S. Füg et al.: "Design, Coding and Processing of Metadata for Object-Based Interactive Audio", AES Convention 137 (2014), Paper 9097, presents a metadata scheme that allows for enhanced audio rendering techniques such as content-dependent processing, automatic scene scaling and enhanced level control. Also, a metadata preprocessing logic is proposed that prepares rendering and playout and allows for user interaction with the audio content of an object-based scene.

It is an object of the present invention to provide an improved solution for controlling playback of audio data when a speech signal shall be conveyed to a user simultaneously with playback of the audio data.

This object is achieved by a method according to appended independent claim 1, by a computer program code according to appended independent claim 8, which implements this method, and by an apparatus according to appended independent claim 9.

Preferred embodiments of the present invention are set forth in the appended dependent claims.

### Figures

- Fig. 1: schematically illustrates a method for controlling playback of audio data;
- Fig. 2: schematically illustrates a first embodiment of an apparatus for controlling playback of audio data;
- Fig. 3: schematically illustrates a second embodiment of an apparatus for controlling playback of audio data;
- Fig. 4: schematically illustrates a motor vehicle in which a solution according to the invention is implemented;
- Fig. 5: schematically illustrates an electronic device in which a solution according to the invention is implemented; and
- Fig. 6: shows a system diagram of a solution according to the invention.

### Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, systems on a chip, microcontrollers, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

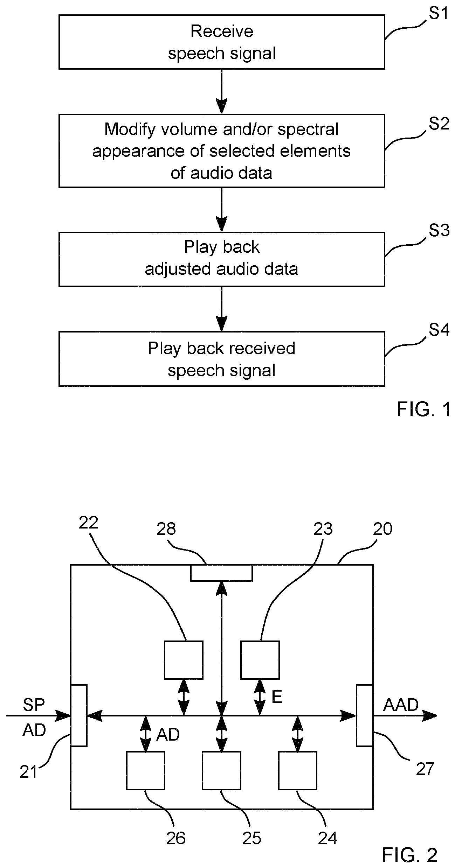

Fig. 1 schematically illustrates a method according to the invention for controlling playback of audio data. In a first step, a speech signal to be conveyed to a user simultaneously with playback of the audio data is received S1, such as an announcement, a notification, verbal information of a voice call, or verbal information uttered by another user. Volume and/or spectral appearance of selected elements of the audio data are then modified S2 to obtain adjusted audio data, wherein the selected elements of the audio data are modified by attenuating or removing vocal content in a foreground track of the audio data independently from processing of a background track of the audio data. In addition, background music may be filtered. According to the invention, the selected elements of the audio data are further adjusted by looping a segment of the audio data. Advantageously, a duration of the adjusted audio data is dependent on a duration of the received speech signal. The duration may allow for a feedback by the user following the speech signal. The adjusted audio data is then played back S3. The received speech signal may then be played back S4 simultaneously with the adjusted audio data. However, playing back S4 the received speech signal may be delayed based on meta information associated with the audio data and/or or based on external data. According to the invention, a playback speed of the speech signal is adapted to a duration of the looped segment.

Fig. 2 schematically illustrates a block diagram of a first embodiment of an apparatus 20 according to the invention for controlling playback of audio data AD. The apparatus 20 has an input 21, via which a receiving unit 22 receives a speech signal SP to be conveyed to a user simultaneously with playback of the audio data AD, such as an announcement, a notification, verbal information of a voice call, or verbal information uttered by another user. The audio data AD is retrieved from a local storage unit 26. A modifying unit 23 is configured to modify volume and/or spectral appearance of selected elements E of the audio data AD to obtain adjusted audio data AAD. In particular, vocal content of the audio data AD is attenuated or removed. In addition, background music may be filtered and/or a segment of the audio data AD may be repeated in a loop. Advantageously, a duration of the adjusted audio data AAD is dependent on a duration of the received speech signal SP. The duration may allow for a feedback by the user following the speech signal SP. A playback unit 24 is configured to play back the adjusted audio data AAD. For this purpose, the adjusted audio data AAD may be made available via an output 27. However, playing back the received speech signal SP may be delayed based on meta information associated with the audio data AD and/or or based on external data. In addition, in case that a segment of the audio data AD is repeated in a loop, a playback speed of the speech signal SP may be adapted to a duration of the looped segment. The output 27 may be combined with the input 21 into a single interface. The local storage unit 26 may further be used for storing data during processing.

The receiving unit 22, the modifying unit 23, and the playback unit 24 may be controlled by a control module 25. A user interface 28 may be provided for enabling a user to modify settings of the receiving unit 22, the modifying unit 23, the playback unit 24, and the control module 25. The receiving unit 22, the modifying unit 23, the playback unit 24, and the control module 25 can be embodied as dedicated hardware units. Of course, they may likewise be fully or partially combined into a single unit or implemented as software running on a processor, e.g. a CPU or a GPU.

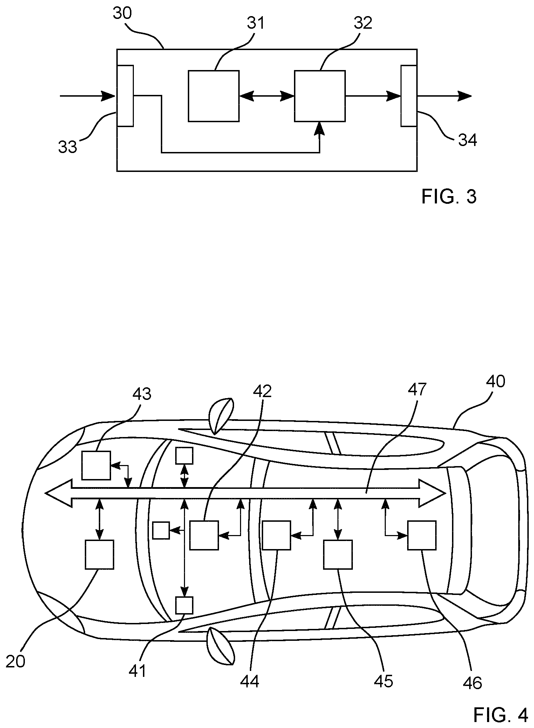

A block diagram of a second embodiment of an apparatus 30 according to the invention for controlling playback of audio data is illustrated in Fig. 3. The apparatus 30 comprises a processing device 32 and a memory device 31. For example, the apparatus 30 may be a computer, an electronic control unit or an embedded system. The memory device 31 has stored instructions that, when executed by the processing device 32, cause the apparatus 30 to perform steps according to one of the described methods. The instructions stored in the memory device 31 thus tangibly embody a program of instructions executable by the processing device 32 to perform program steps as described herein according to the present principles. The apparatus 30 has an input 33 for receiving data. Data generated by the processing device 32 are made available via an output 34. In addition, such data may be stored in the memory device 31. The input 33 and the output 34 may be combined into a single bidirectional interface.

The processing device 32 as used herein may include one or more processing units, such as microprocessors, digital signal processors, or a combination thereof.

The local storage unit 26 and the memory device 31 may include volatile and/or non-volatile memory regions and storage devices such as hard disk drives, optical drives, and/or solid-state memories.

Fig. 4 schematically shows a motor vehicle 40, in which a solution in accordance with the invention is implemented. In this example, the motor vehicle 40 is a car. The car has a number of speakers 41 for providing audio playback to passengers of the motor vehicle 40. Audio signals may be provided to the speakers 41 by an infotainment system 42. Further components of the motor vehicle 40 in this example are a navigation system 43 and environment sensors 44, such as ultrasonic sensors, laser scanners, lidar sensors, radar sensors, or cameras. The navigation system 43 may generate announcements, which may need to be played back in parallel to audio playback. Likewise, data derived by the environment sensors 44 may lead to the generation of warning announcements, which may need to be played back in parallel to audio playback. Therefore, the motor vehicle 40 comprises an apparatus 20 according to the invention for controlling playback of audio data. In this example, the apparatus 20 is a self-contained unit. Of course, the apparatus 20 may likewise be incorporated into the infotainment system 42, for example. By means of a data transmission unit 45 a connection to a backend can be established, e.g. to receive audio data for playback or updated program code. Audio data for playback may also be received via local audio interfaces, such as Bluetooth, memory interfaces, auxiliary inputs, etc. A memory 46 is available for storing data. The data exchange between the different components of the motor vehicle 40 takes place via a network 47.

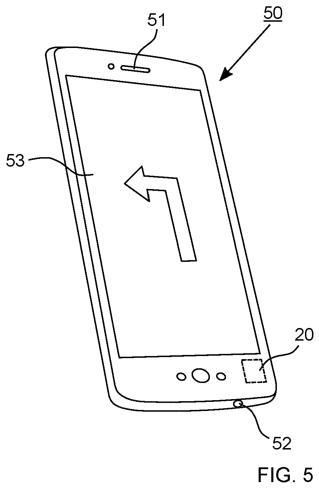

Fig. 5 schematically illustrates an electronic device 50 in which a solution in accordance with the invention is implemented. In this example, the electronic device 50 is a smartphone. The smartphone has a speaker 51, via which audio playback is possible. Audio playback may likewise be performed via a headset (not shown) connected to a socket 52 of the smartphone. A navigation application running on the smartphone may provide visual navigation instructions to a user of the smartphone via a screen 53. The navigation application may further generate announcements, which may need to be played back in parallel to audio playback. Likewise, other applications, such as messengers or social media applications, may generate notifications that need to be played back. Therefore, the smartphone comprises an apparatus 20 according to the invention for controlling playback of audio data.

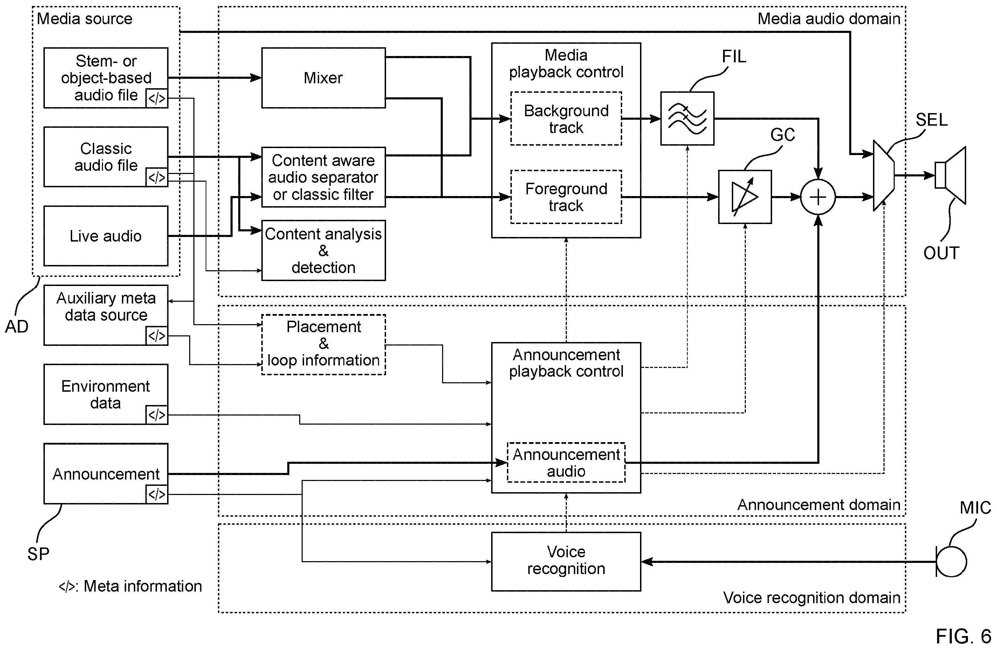

Fig. 6 shows a system diagram of a solution according to the invention. In this example, the speech signal to be conveyed to a user is an announcement. In the figure, the thick lines indicate the flow of audio data, the solid thin lines indicate the flow of meta information, and the dashed lines indicate the flow of control information. The system diagram is split into three different domains, i.e., a media audio domain, an announcement domain, and a voice recognition domain. Audio data may originate from different media sources. Absent any announcement, the audio data are simply provided to a selector SEL and output to one or more audio outputs OUT, which are symbolized by a speaker. The selector SEL is optional and symbolizes that the advanced audio processing is only needed when a speech signal shall be integrated.

In case of an announcement, however, the audio data from the different media sources is processed in the media audio domain. For example, a stem-based or object-based audio file may be provided to a mixer, which outputs a background track and a foreground track, e.g. vocal content, to a media playback control block. Alternatively, a classic audio file or live audio may be provided to a content aware audio separator or a classic filter for processing. This audio separator or filter then outputs a background track and a foreground track to the media playback control block. The media playback control block provides the background track to a filter FIL, e.g. for reducing spectral components that are potentially impeding comprehensibility. The foreground track is provided to a gain control GC for attenuation or removal.

Meta information, which may be associated with the audio data, obtained from an auxiliary meta data source, or derived by a content analysis and detection block, is provided to an optional placement and loop information block, which determines an appropriate placement of announcement as well as a segment of the audio data that may be repeated in a loop, if such a segment should be available. The placement and loop information block provides the respective information to an announcement playback control block. The announcement playback control block initiates operation of the media playback control block, the filter FIL, and the gain control GC with the appropriate timing, and provides the audio signal of the announcement to a combiner. The placement of the announcement may also be influenced by external data. Metrics for this can be driving situations, which may be derived by evaluating map data, traffic data, or sensor data, or information on stress or attention of the user. The combiner combines this audio signal with the adjusted foreground track and the adjusted background track, and provides the combined audio signal to the selector SEL. The selector SEL is controlled by the announcement playback control block in such way that the combined audio signal is output to the speaker SPK.

In the voice recognition domain, voice data acquired by one or more microphones MIC are evaluated by a voice recognition block. Voice recognition may be triggered by the announcement. The voice recognition preferably provides a signal to the announcement playback control block that voice recognition is completed. In this way, the announcement playback control block can terminate adjustment of the foreground track and the background track and switch back to unaltered audio playback by providing an appropriate signal to the selector SEL.

### Reference numerals

- 20: Apparatus
- 21: Input
- 22: Receiving unit
- 23: Modifying unit
- 24: Playback unit
- 25: Control module
- 26: Local storage unit
- 27: Output
- 28: User interface
- 30: Apparatus
- 31: Memory device
- 32: Processing device
- 33: Input
- 34: Output
- 40: Motor vehicle
- 41: Speaker
- 42: Infotainment system
- 43: Navigation system
- 44: Environment sensors
- 45: Data transmission unit
- 46: Memory
- 47: Network
- 50: Electronic device
- 51: Speaker
- 52: Socket
- 53: Screen

- AAD: Adjusted audio data
- AD: Audio data
- E: Element
- FIL: Filter
- GC: Gain control
- MIC: Microphone
- OUT: Audio output
- SEL: Selector
- SP: Speech signal

- S1: Receive speech signal
- S2: Modify volume and/or spectral appearance of selected elements of audio data
- S3: Play back adjusted audio data
- S4: Play back received speech signal

## Claims

1. A method for controlling playback of audio data (AD), the method comprising:
- receiving (S1) a speech signal (SP) to be conveyed to a user simultaneously with playback of the audio data (AD);
- modifying (S2) volume and/or spectral appearance of selected elements (E) of the audio data (AD) to obtain adjusted audio data (AAD); and
- playing back (S3) the adjusted audio data (AAD);
wherein the selected elements (E) of the audio data (AD) are modified (S2) by attenuating or removing vocal content in a foreground track of the audio data (AD) independently from processing of a background track of the audio data (AD) **characterized in that** the selected elements (E) of the audio data (AD) are further adjusted (S2) by looping a segment of the audio data (AD)and a playback speed of the speech signal (SP) is adapted to a duration of the looped segment.

2. The method according to claim 1, further comprising playing back (S4) the received speech signal (SP) simultaneously with the adjusted audio data (AAD).

3. The method according to claim 2, wherein playing back (S4) the received speech signal (SP) is delayed based on meta information associated with the audio data (AD) and/or or based on external data.

4. The method according to one of the preceding claims, wherein the speech signal (SP) to be conveyed is an announcement, a notification, verbal information of a voice call, or verbal information uttered by another user.

5. The method according to one of the preceding claims, wherein the selected elements (E) of the audio data (AD) are further adjusted (S2) by filtering background music.

6. The method according to one of the preceding claims, wherein a duration of the adjusted audio data (AAD) is dependent on a duration of the received speech signal (SP).

7. The method according to claim 6, wherein the duration of the adjusted audio data (AAD) allows for a feedback by the user following the speech signal (SP).

8. A computer program code comprising instructions, which, when executed by at least one processor, cause the at least one processor to perform a method according to any of claims 1 to 7 for controlling playback of audio data.

9. An apparatus (20) for controlling playback of audio data, the apparatus (20) comprising:
- a receiving unit (22) configured to receive (S1) a speech signal (SP) to be conveyed to a user simultaneously with playback of the audio data (AD);
- a modifying unit (23) configured to modify (S2) volume and/or spectral appearance of selected elements (E) of the audio data (AD) to obtain adjusted audio data (AAD); and
- a playback unit (24) configured to play back (S3) the adjusted audio data (AAD); wherein the modifying unit (23) is configured to modify (S2) the selected elements (E) of the audio data (AD) by attenuating or removing vocal content in a foreground track of the audio data (AD) independently from processing of a background track of the audio data (AD), **characterized in that** the selected elements (E) of the audio data (AD) are further adjusted (S2) by looping a segment of the audio data (AD)and a playback speed of the speech signal (SP) is adapted to a duration of the looped segment.

10. A motor vehicle (40), **characterized in that** the motor vehicle (40) comprises an apparatus (20) according to claim 9 or is configured to perform a method according to any of claims 1 to 7 for controlling playback of audio data.

11. An electronic device (50) capable of playback of audio data, **characterized in that** the electronic device (50) comprises an apparatus (20) according to claim 9 or is configured to perform a method according to any of claims 1 to 7 for controlling playback of audio data.

## Patentansprüche

1. Verfahren zur Steuerung der Wiedergabe von Audiodaten (AD), wobei das Verfahren Folgendes umfasst:
- Empfangen (S1) eines Sprachsignals (SP), das einem Benutzer gleichzeitig mit der Wiedergabe der Audiodaten (AD) übermittelt werden soll;
- Modifizieren (S2) der Lautstärke und/oder der spektralen Erscheinung ausgewählter Elemente (E) der Audiodaten (AD), um angepasste Audiodaten (AAD) zu erhalten; und
- Wiedergeben (S3) der angepassten Audiodaten (AAD);
wobei die ausgewählten Elemente (E) der Audiodaten (AD) durch Dämpfen oder Entfernen von stimmlichem Inhalt in einer Vordergrundspur der Audiodaten (AD) unabhängig von der Verarbeitung einer Hintergrundspur der Audiodaten (AD) modifiziert werden (S2), **dadurch gekennzeichnet, dass** die ausgewählten Elemente (E) der Audiodaten (AD) weiter angepasst werden (S2) durch Schleifenbildung eines Segments der Audiodaten (AD) und eine Wiedergabegeschwindigkeit des Sprachsignals (SP) an eine Dauer des in Schleife wiedergegebenen Segments angepasst wird.

2. Verfahren nach Anspruch 1, ferner umfassend das Wiedergeben (S4) des empfangenen Sprachsignals (SP) gleichzeitig mit den angepassten Audiodaten (AAD).

3. Verfahren nach Anspruch 2, wobei das Wiedergeben (S4) des empfangenen Sprachsignals (SP) basierend auf Metainformationen, die den Audiodaten (AD) zugeordnet sind, und/oder basierend auf externen Daten verzögert wird.

4. Verfahren nach einem der vorhergehenden Ansprüche, wobei das zu übermittelnde Sprachsignal (SP) eine Ansage, eine Benachrichtigung, mündliche Informationen eines Sprachanrufs oder mündliche Informationen, die von einem anderen Benutzer geäußert werden, ist.

5. Verfahren nach einem der vorhergehenden Ansprüche, wobei die ausgewählten Elemente (E) der Audiodaten (AD) durch Filtern von Hintergrundmusik weiter angepasst werden (S2).

6. Verfahren nach einem der vorhergehenden Ansprüche, wobei eine Dauer der angepassten Audiodaten (AAD) von einer Dauer des empfangenen Sprachsignals (SP) abhängig ist.

7. Verfahren nach Anspruch 6, wobei die Dauer der angepassten Audiodaten (AAD) eine Rückmeldung durch den Benutzer im Anschluss an das Sprachsignal (SP) zulässt.

8. Computerprogrammcode, umfassend Anweisungen, die, wenn sie von mindestens einem Prozessor ausgeführt werden, den mindestens einen Prozessor veranlassen, ein Verfahren nach einem der Ansprüche 1 bis 7 zur Steuerung der Wiedergabe von Audiodaten durchzuführen.

9. Einrichtung (20) zur Steuerung der Wiedergabe von Audiodaten, wobei die Einrichtung (20) Folgendes umfasst:
- eine Empfangseinheit (22), die konfiguriert ist, um ein Sprachsignal (SP) zu empfangen (S1), das einem Benutzer gleichzeitig mit der Wiedergabe der Audiodaten (AD) übermittelt werden soll;
- eine Modifizierungseinheit (23), die konfiguriert ist, um die Lautstärke und/oder die spektrale Erscheinung ausgewählter Elemente (E) der Audiodaten (AD) zu modifizieren (S2), um angepasste Audiodaten (AAD) zu erhalten; und
- eine Wiedergabeeinheit (24), die konfiguriert ist, um die angepassten Audiodaten (AAD) wiederzugeben (S3);
wobei die Modifizierungseinheit (23) konfiguriert ist, um die ausgewählten Elemente (E) der Audiodaten (AD) durch Dämpfen oder Entfernen von stimmlichem Inhalt in einer Vordergrundspur der Audiodaten (AD) unabhängig von der Verarbeitung einer Hintergrundspur der Audiodaten (AD) zu modifizieren (S2), **dadurch gekennzeichnet, dass** die ausgewählten Elemente (E) der Audiodaten (AD) weiter angepasst werden (S2) durch Wiedergeben eines Segments der Audiodaten (AD) in Schleife und eine Wiedergabegeschwindigkeit des Sprachsignals (SP) an eine Dauer des in Schleife wiedergegebenen Segments angepasst wird.

10. Kraftfahrzeug (40), **dadurch gekennzeichnet, dass** das Kraftfahrzeug (40) eine Einrichtung (20) nach Anspruch 9 umfasst oder konfiguriert ist, um ein Verfahren nach einem der Ansprüche 1 bis 7 zur Steuerung der Wiedergabe von Audiodaten durchzuführen.

11. Elektronische Vorrichtung (50), die zur Wiedergabe von Audiodaten in der Lage ist, **dadurch gekennzeichnet, dass** die elektronische Vorrichtung (50) eine Einrichtung (20) nach Anspruch 9 umfasst oder konfiguriert ist, um ein Verfahren nach einem der Ansprüche 1 bis 7 zur Steuerung der Wiedergabe von Audiodaten durchzuführen.

## Revendications

1. Procédé de contrôle de la lecture de données audio (AD), le procédé comprenant :
- la réception (S1) d'un signal vocal (SP) destiné à être transmis à un utilisateur simultanément avec la lecture des données audio (AD) ;
- la modification (S2) du volume et/ou de l'apparence spectrale d'éléments sélectionnés (E) des données audio (AD) afin d'obtenir des données audio ajustées (AAD) ; et
- la lecture (S3) des données audio ajustées (AAD) ;
dans lequel les éléments sélectionnés (E) des données audio (AD) sont modifiés (S2) en atténuant ou en supprimant le contenu vocal dans une piste de premier plan des données audio (AD) indépendamment du traitement d'une piste d'arrière-plan des données audio (AD), **caractérisé en ce que** les éléments sélectionnés (E) des données audio (AD) sont en outre ajustés (S2) en bouclant un segment des données audio (AD) et **en ce qu'**une vitesse de lecture du signal vocal (SP) est adaptée à la durée du segment bouclé.

2. Procédé selon la revendication 1, comprenant en outre la lecture (S4) du signal vocal (SP) reçu simultanément avec les données audio ajustées (AAD).

3. Procédé selon la revendication 2, dans lequel la lecture (S4) du signal vocal (SP) reçu est retardée sur la base des métadonnées associées aux données audio (AD) et/ou sur la base de données externes.

4. Procédé selon l'une des revendications précédentes, dans lequel le signal vocal (SP) destiné à être transmis est une annonce, une notification, une information verbale d'un appel vocal ou une information verbale prononcée par un autre utilisateur.

5. Procédé selon l'une des revendications précédentes, dans lequel les éléments sélectionnés (E) des données audio (AD) sont en outre ajustés (S2) par filtrage de la musique d'arrière-plan.

6. Procédé selon l'une des revendications précédentes, dans lequel la durée des données audio ajustées (AAD) dépend de la durée du signal vocal (SP) reçu.

7. Procédé selon la revendication 6, dans lequel la durée des données audio ajustées (AAD) permet un retour d'information de l'utilisateur à la suite du signal vocal (SP).

8. Code de programme informatique comprenant des instructions, qui, lorsqu'elles sont exécutées par au moins un processeur, amènent l'au moins un processeur à réaliser un procédé selon l'une quelconque des revendications 1 à 7 pour contrôler la lecture de données audio.

9. Appareil (20) pour contrôler la lecture de données audio, l'appareil (20) comprenant :
- une unité de réception (22) configurée pour recevoir (S1) un signal vocal (SP) destiné à être transmis à un utilisateur simultanément à la lecture des données audio (AD) ;
- une unité de modification (23) configurée pour modifier (S2) le volume et/ou l'apparence spectrale d'éléments sélectionnés (E) des données audio (AD) afin d'obtenir des données audio ajustées (AAD) ; et
- une unité de lecture (24) configurée pour lire (S3) les données audio ajustées (AAD) ;
dans lequel l'unité de modification (23) est configurée pour modifier (S2) les éléments sélectionnés (E) des données audio (AD) en atténuant ou en supprimant un contenu vocal dans une piste de premier plan des données audio (AD), indépendamment du traitement d'une piste d'arrière-plan des données audio (AD), **caractérisé en ce que** les éléments sélectionnés (E) des données audio (AD) sont en outre ajustés (S2) en bouclant un segment des données audio (AD) et **en ce qu'**une vitesse de lecture du signal vocal (SP) est adaptée à une durée du segment bouclé.

10. Véhicule automobile (40), **caractérisé en ce que** le véhicule automobile (40) comprend un appareil (20) selon la revendication 9 ou est configuré pour réaliser un procédé selon l'une quelconque des revendications 1 à 7 pour contrôler la lecture de données audio.

11. Dispositif électronique (50) capable de lire des données audio, **caractérisé en ce que** le dispositif électronique (50) comprend un appareil (20) selon la revendication 9 ou est configuré pour réaliser un procédé selon l'une quelconque des revendications 1 à 7 pour contrôler la lecture de données audio.
